# EUROPÄISCHE PATENTSCHRIFT

(11) **EP 1 493 599 B1**
(45) Veröffentlichungstag und Bekanntmachung des Hinweises auf die Patenterteilung: **23.02.2011**
(21) Anmeldenummer: 04013989.1
(22) Anmeldetag: 15.06.2004
(51) Int. Cl.: B60C 23/00

(54) **Reifendruckregelanlage**
Device for regulating tyre pressure
Installation de réglage de la pression de pneus

(30) Priorität: 02.07.2003 DE 10329937
(43) Veröffentlichungstag der Anmeldung: 05.01.2005
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Claussen, Frank, 33428 Greffen (DE); Strotmann, Georg, 33442 Herzebrock-Clarholz (DE)

(56) Entgegenhaltungen:
- DE-A1- 4 014 379
- US-A- 5 587 698
- US-A- 6 144 295

## Beschreibung

Die Erfindung betrifft ein Verfahren und eine Vorrichtung zur Druckregelung von gasgefüllten Reifen nach den Oberbegriffen der Ansprüche 1 und 16.

Derartige Reifendruckregelanlagen werden bei Arbeitsfahrzeugen, insbesondere selbstfahrenden Erntemaschinen, eingesetzt, um die Belastung der Fahrbahn bzw. des Feldbodens zu verringern. Durch das Absenken des Reifendrucks wird die Aufstandsfläche vergrößert, wodurch der Feldboden schonend befahren werden kann. Für die Fahrt auf der Straße wird der Reifendruck erhöht, da bei hohen Geschwindigkeiten ein höherer Druck notwendig ist, um Schäden am Reifen zu vermeiden.

Die DE 198 04 249 beschreibt eine Reifendruckregelanlage, bei der der Luftdruck im Reifen während der Fahrt an die Einsatzbedingungen angepasst wird. Die Regelung des Luftdrucks erfolgt in Abhängigkeit von spezifischen Zustandsgrößen wie: Achslast, Geschwindigkeit und Zugkraft.

Aus der US 6,144,295 ist eine Reifendruckregelanlage mit einer Steuereinheit bekannt, die eine automatische Druckregelung von gasbefüllten Radreifen an einem Arbeltsfahrzeug erlaubt. Hierzu wird der Reifendruck eines Radreifens in Abhängigkeit von der Änderung der Masse oder der Lage des Schwerpunktes des Arbeitsfahrzeuges verändert.

Nachteilig bei dieser erfindungsgemäßen Reifendruckregelanlage ist, dass sich die zur Regelung erforderlichen Zustandsgrößen während des Betriebs ständig plötzlich und abrupt ändern und eine Regelung des Luftdrucks nach kurzzeitig auftretenden Messgrößen erfolgt. Zudem ist es mit derartigen Reifendruckregelanlagen nicht möglich kontinuierlich den Reifendruck in Abhängigkeit von sich ändernden Fahrzeugmassen anzupassen.

Der Erfindung liegt daher die Aufgabe zugrunde ein Verfahren und eine Vorrichtung zur automatischen Reifendruckregelung zu schaffen, bei der die Regelung des Reifendrucks in Abhängigkeit von spezifischen Zustandsgrößen erfolgt, die sich stetig und systematisch ändern und die zugleich das Fahrverhalten wie etwa auf unbefestigtem Untergrund beeinflussen kann.

Diese Aufgabe wird durch ein Verfahren nach Anspruch 1 sowie durch eine Vorrichtung nach Anspruch 16 gelöst.

Damit sich ein auf dem Feld festgefahrener bzw. steckengebliebener Mähdrescher aus eigener Kraft befreien kann bzw. der Mähdrescher tiefe Schlammpfützen durchfahren kann, wird der Reifendruck für einen begrenzten Zeitraum unter einen minimal zulässigen Reifendruck auf einen kritischen Reifenruck abgesenkt. Dabei werden über Sensoren Parameter gemessen, die die Erwärmung des Radreifens beeinflussen. Nach Ablauf des begrenzten Zeitraums wird der Reifendruck automatisch wiederhergestellt. Bis zur wiederholten Aktivierung des Verfahrens muss eine definierte Abkühlzeit vergangen sein.

Um die Radreifen nicht über die Belastungsgrenzen hinaus zu beanspruchen, wird der begrenzte Zeitraum mit den Parametern und einem vom Radreifen abhängigen Kennwert bestimmt.

Um die Bedienung so einfach wie möglich zu gestalten wird das Absenken des Reifendrucks über einen Nottaster aktiviert.

Weiterhin weist das Verfahren Sensoren auf, mit deren erzeugter Ausgangssignale in einer Verrechnungseinheit eine Maschinenmasse berechnet wird, die an die Steuerung übermittelt wird und die Steuereinheit den Reifendruck abhängig von der Maschinenmasse regelt, so dass der Reifendruck kontinuierlich in Abhängigkeit von der Fahrzeugmasse veränderbar ist.

Um mit wenigen zusätzlichen Sensoren auszukommen und eine wirtschaftliche Messung und Regelung durchzuführen, wird die Maschinenmasse vorteilhafterweise mit einem Sensor gemessen und mit dem in Abhängigkeit von dem wenigstens einem Sensor erzeugten Signal der Reifendruck verstellt.

Bei einem bevorzugten Ausführungsbeispiel wird die Befüllung des Korntanks pro Zeiteinheit mit einem Ertragssensor an einem Kornelevator erfasst. Diese Bauteile sind ohnehin für die Ertragskartierung am Mähdrescher vorgesehen, so dass keine zusätzlichen Kosten für die Vorrichtung entstehen.

In weiterer Ausgestaltung des Ausführungsbeispiels wird der Inhalt des Korntanks mit mehreren Füllstandssensoren gemessen, um einerseits den Füllstand zu detektieren und andrerseits die Messwerte mit dem Ertragssensor abzugleichen.

In vorteilhafter Weiterbildung der Erfindung werden die von den Sensoren generierten Signale an eine Verrechnungseinhelt übertragen, die Ausgangssignale generiert, die unmittelbar an eine Steuereinheit weitergeleitet werden, so dass der Reifendruck kontinuierlich an die sich ändernde Maschinenmasse angepasst werden kann.

Um den Reifendruck eines jeden Radreifens individuell regeln zu können, berechnet die Verrechnungseinheit eine Maschinenmasse und eine auf jeden Radreifen anteilig wirkende Teilmasse.

Vorteilhafterweise wird die Masse des Vorsatzgerätes über einen Drucksensor einer Stützhydraulik gemessen, damit jedes beliebige Vorsatzgerät ohne Kenntnis der Masse und des Teilschwerpunktes zur Berechnung der Maschinenmasse berücksichtigt werden kann.

Um die Reifen vor Beschädigungen zu Schützen, wird der minimal zulässige Reifendruck durch Sollwertkurven begrenzt. Die Sollwertkurven berücksichtigen vorteilhafterweise die Parameter Maschinenmasse, Geschwindigkeit und Reifentyp.

Die Sollwertkurven sind bei dem Ausführungsbeispiel in einem Speicher gespeichert, damit die Verrechnungseinheit direkten Zugriff auf alle Sollwerte hat.

Die obere Geschwindigkeitsgrenze, der Typ eines Vorsatzgerätes und die Reifentypen können über das Bedienfeld in den Speicher eingegeben werden, sie werden bei der Berechnung der Maschinenmasse bzw. der Festlegung der Sollwertkurve berücksichtigt, so dass die Individuelle Ausrüstung am Fahrzeug bei der Regelung des Reifendrucks berücksichtigt wird.

Die Steuereinheit regelt den Reifendruck auf den minimalen zulässigen Reifendruck, damit der Bodendruck so gering wie möglich ist und dennoch die Betriebssicherheit garantiert ist.

Der Reifendruck der Radreifen wird an jedem Radreifen einzeln und/oder pro Seite geregelt, um die Neigung des Fahrzeugs bei Fahrten am Hang zu verändern und auch bei unterschiedlichen Radlasten einen annähernd gleichmäßig niedrigen Bodendruck zu erreichen.

Vortellhafterweise weist die Vorrichtung einen mit wenigstens einem Ertragssensor ausgestatteten Elevator zur zeitabhängigen Messung eines in einen Behälter geförderten Volumens, wenigstens einen Sensor zur Erfassung eines Füllstandes in dem Behälter und wenigstens eine an die Steuereinheit und die Sensoren gekoppelte Verrechnungseinheit auf, Bauteile, die zur Ertragskartierung ohnehin am Mähdrescher vorhanden sind.

Weitere vorteilhafte Ausführungen sind Gegenstand weiterer Unteransprüche und werden nachfolgend an Hand eines in mehreren Figuren dargestellten Ausführungsbelspiels beschrieben.

Es zeigt:
Fig.1 einen Mähdrescher mit schematisch angedeuteter Verrechnungseinheit,
Fig.2 die konkrete Darstellung einer Verrechnungseinheit.

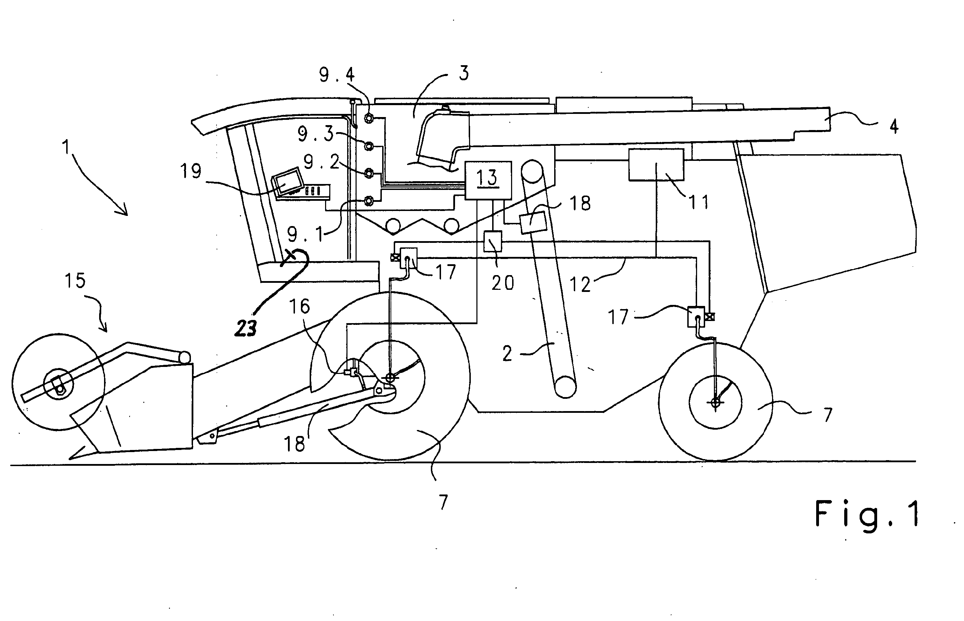

In der Fig.1 ist ein an sich bekannter und daher hier nicht näher erläuterter Mähdrescher 1 dargestellt. Der Mähdrescher 1 ist mit einer Reifendruckregelanlage 6 ausgestattet, mit der der Reifendruck der luftgefüllten Radreifen 7 verändert werden kann. Diese Reifendruckregelanlage 6 besteht aus einem Druckluftkompressor 11, der über Zuleitungen 12 mit den Radreifen 7 verbunden ist. In den Zuleitungen 12 sind verstellbare Ventile 17 eingebaut, die ein kontrolliertes Befüllen und Entleeren des Radreifens 7 bzw. ein Halten des Reifendrucks ermöglichen. Die Ventile 17 sind an eine Steuereinheit 20 angeschlossen, welche die Stellung der Ventile 17 regelt. Mit Hilfe der Steuereinheit 20 wird der Reifendruck in Abhängigkeit von der Maschinenmasse des Mähdreschers 1 geregelt, wie später näher erläutert wird.

Über ein Bedienfeld 19 werden die an dem Mähdrescher 1 angebauten Radreifen 7 und das angebaute Vorsatzgerät 15 eingegeben. Zusätzlich wird über das Bedienfeld 19 eine Betriebsart ausgewählt, die die maximale Geschwindigkeit vorgibt. Das Bedienfeld 19 ist mit einer Verrechnungseinheit 13 verbunden.

Der Mähdrescher 1 erntet das Erntegut mit dem Vorsatzgerät 15 vom Feld und bereitet es auf. Dabei wird das Erntegut mit an sich bekannten Einrichtungen im und am Mähdrescher 1 in Körner und Stroh sowie Spreu getrennt. Das Stroh und die Spreu werden hinter dem Mähdrescher 1 auf dem Feld abgelegt. Die Körner werden über einen Kornelevator 2 In einen Korntank 3 im Mähdrescher 1 gefördert, wo sie zwischengelagert werden. Ist der Korntank 3 befüllt, wird er mit einem Komtankentleerrohr 4 In einen Ladewagen (nicht dargestellt) entleert.

In dem Kornelevator 2 ist ein Ertragssensor 8 angeordnet, der ein in einem begrenzten Zeitraum in den Korntank 3 gefördertes Volumen an Körnern erfasst und ein zugehöriges Signal generiert.

In dem Korntank 3 sind in verschiedenen Höhen Füllstandssensoren 9.1, 9.2, 9.3, 9.4 angeordnet, die den Füllstand bei beispielsweise 20%, 70%, 100% sowie leerem Korntank 3 detektieren und ein Signal generieren.

Die Sensoren 8, 9.1, 9.2, 9.3, 9.4, 16 sind ebenfalls mit der Verrechnungseinheit 13 verbunden.

Alternativ kann die Masse des Vorsatzgerätes 15 auch mit Drucksensoren 16 an einer Stützhydraulik 18 für das Vorsatzgerät 15 gemessen werden.

Die Verrechnungseinheit 13 ist mit der Steuereinheit 20 der Reifendruckregelanlage 6 verbunden, die den Reifendruck in Abhängigkeit von einem von der Verrechnungseinheit 13 generierten Signal ändert.

Die Steuereinheit 20 ändert den Reifenluftdruck auf den minimal zulässigen Reifendruck in Abhängigkeit von in der Verrechnungseinheit 13 berechneten Tellmasse.

Die Steuereinheit 20 der Reifendruckregelanlage 6 kann den Reifendruck auch an einem einzelnen Radreifen 7 bzw. seitenweise am Mähdrescher regeln, um z. B. die Neigung des Mähdreschers 1 bei Fahrten am Hang auszugleichen.

In der Nähe der Bedieneinheit Ist ein Nottaster 23 angebracht mit dem der Reifendruck für einen begrenzten Zeitraum unter den minimal zulässigen Druck auf einen kritischen Druck abgesenkt wird.

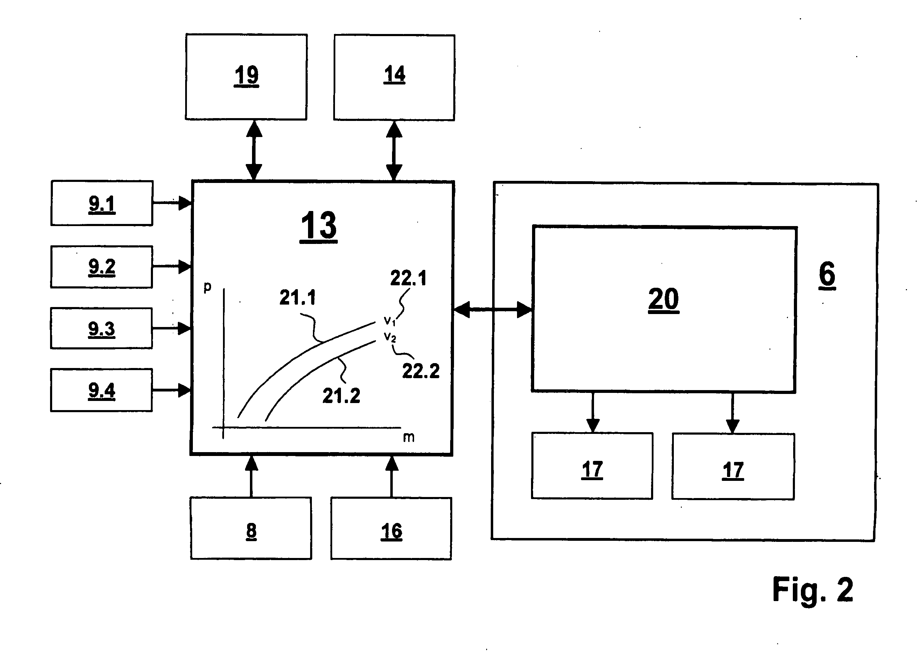

Fig.2 stellt die konkrete Darstellung der Verrechnungseinheit dar, die mit der Bedieneinheit 19, den Sensoren 6, 8, 9.1, 9.2, 9.3, 9.4, 16, 18 und der Steuereinheit 20 verbunden ist.

In der Verrechnungseinheit 13 werden den über das Bedienfeld 19 eingegebenen Reifentypen und dem Vorsatzgerätetyp entsprechende Massen bzw. Massenschwerpunkte zugeordnet, die in der Verrechnungseinheit 13 gespeichert sind.

Mit den von den Sensoren 8, 9.1, 9.2, 9.3, 9.4 generierten Signalen berechnet die Verrechnungseinheit 13 die nicht unmittelbar messbaren Füllstände bzw. die Masse des Korntankinhalts 3 unter Berücksichtigung einer bekannten spezifischen Dichte der Körner.

Zur Berechnung der Maschinenmasse addiert die Verrechnungseinheit 13 die bekannte Masse des Mähdreschers 1, die Masse des Vorsatzgerätes 15 und die berechnete Masse des Inhalts im Korntank 3.

Um die auf einen Radreifen anteilig wirkende Teilmasse berechnen zu können, muss weiterhin die Verteilung der Masse bezüglich der Radreifen bekannt sein. Die Verteilung der Massen ist durch den fixen Abstand der Radreifen, bzw. die fixe Lage der Massenschwerpunkte von Mähdrescher, Vorsatzgerät und Korntank als eine mathematische Funktion in der Verrechnungseinheit 13 vorgegeben.

Die Verrechnungseinheit 13 berechnet abhängig von der mathematischen Funktion aus der Maschinenmasse anschließend die auf jeden Radreifen 7 anteilig wirkenden Teilmassen.

Im Speicher 14 der Verrechnungseinheit 13 sind sollwertkurven 21.1, 21.2 für verschiedene Radreifentypen abgespeichert, bei denen für eine bestimmte Teilmasse und bei einer bestimmten Geschwindigkeit ein minimal zulässiger Reifenmindestdruc vorgegeben ist. Diese Sollwertkurven 21.1, 21.2 unterliegen Angaben der Reifenhersteller, die unbedingt einzuhalten sind, um einen sicheren Betrieb der Radreifen 7 zu gewährleisten.

Die jeweils relevante Sollwertkurve 21.1, 21.2 wird über die obere Geschwindigkeitsgrenze 22.1, 22.2 bzw. der Betriebsart festgelegt, und ein zugehöriger minimaler Reifendruck von der Verrechnungseinheit 13 anhand der relevanten Sollwertkurve 21.1, 21.2 bestimmt.

Der minimal zulässige Reifendruck wird von der Verrechnungseinheit 13 an die Steuereinheit 20 übermittelt, die den Reifendruck abhängig von der berechneten Teilmasse regelt.

Über den Nottaster 23 wird ein Verfahren gestartet mit dem der Reifendruck für einen begrenzten Zeitraum unter den minimal zulässigen Druck auf einen kritischen Druck abgesenkt wird. Die Verrechnungseinheit 13 errechnet den kritischen Reifendruck mit 35% vom minimal zulässigen Reifendruck.

Während des Betriebs des Fahrzeugs mit dem kritischen Reifendruck werden Parameter gemessen werden, die zur Erwärmung des Radreifens 7 führen können, wie z.B. die Geschwindigkeit, die Masse, die Temperatur.

Mit den gemessenen Parametern und einem vom Radreifen abhängigen Kennwert wird der begrenzte Zeitraum für den Betrieb mit dem kritischen Reifendruck bestimmt.

Nach Ablauf des begrenzten Zeitraums wird der zulässige Reifendruck automatisch wiederhergestellt.

Bis zur wiederholten Aktivierung des Verfahrens muss eine definierte Abkühlzeit vergangen sein.

Die Erfindung ist unter anderem auch für Gespanne aus einem Schlepper mit angehängtem, fahrbarem Güllefass geeignet, wobei sich die Masse des Güllefass durch Versprühen der Gülle auf das Feld stetig reduziert und die Masse des Schleppers konstant ist.

Die Erfindung ist nicht auf die beschriebenen Ausführungsbeispiele beschränkt sondern kann an beliebigen Arbeitsfahrzeugen eingesetzt werden, um die beschriebenen Effekte zu erzielen.

### Bezugszeichenliste:

- 1: Mähdrescher
- 2: Kornelevator
- 3: Korntank
- 4: Korntankentleerrohr
- 5: Ladewagen
- 6: Reifendruckregelanlage
- 7: Radreifen
- 8: Ertragssensor
- 9.1...9.4: Füllstandsensoren
- 11: Druckluftkompressor
- 12: Zuleitungen
- 13: Verrechnungseinheit
- 14: Speicher
- 15: Vorsatzgerät
- 16: Drucksensoren
- 17: Ventile
- 18: Stützhydraulik
- 19: Bedienfeld
- 20: Steuereinheit
- 21.1...21.2: Sollwertkurven
- 22.1...22.2: Geschwindigkeitsgrenzen
- 23: Nottaster

## Patentansprüche

1. Verfahren zur automatischen Druckregelung von gasgefüllten Radreifen an wenigstens einem Arbeitsfahrzeug, mit wenigstens einer Reifendruckregelanlage (6), die mit wenigstens einer Steuereinheit (20) ausgestattet Ist,
**dadurch gekennzeichnet,**
**dass** der Relfendruck für einen begrenzten Zeitraum unter einen minimal zulässigen Relfendruck auf einen kritischen Reifenruck abgesenkt wird,
**dass** über Sensoren Parameter gemessen werden, die die Erwärmung des Radreifens (7) beeinflussen,
**dass** nach Ablauf des begrenzten Zeitraums der Reifendruck automatisch wiederhergestellt wird,
**dass** bis zur wiederholten Aktivierung des Verfahrens eine definierte Abkühlzeit vergangen sein muss.

2. Verfahren nach Anspruch 1,
**dadurch gekennzeichnet**,
das der begrenzte Zeitraum mit den Parametern und einem vom Radreifen (7) abhängigen Kennwert bestimmt wird.

3. Verfahren nach wenigstens einem der vorangegangenen Ansprüche,
**dadurch gekennzeichnet,**
**dass** das Absenken des Reifendrucks über einen Nottaster (23) aktiviert wird.

4. Verfahren nach einem der Ansprüche 1 bis 3, **dadurch gekennzeichnet, dass** der Reifendruck wenigstens eines Radreifens (7) in Abhängigkeit von wenigstens einer Maschinenmasse veränderbar ist.

5. Verfahren nach wenigstens einem der vorhergehenden Ansprüche **dadurch gekennzeichnet, dass** mittels wenigstens eines Sensors (8, 16, 9.1...9.4) mindestens die eine Maschinenmasse gemessen wird und ein in Abhängigkeit von dem wenigstens in einem Sensor (8, 16, 9.1,...9.4) erzeugten Signal der Reifendruck verstellt wird.

6. Verfahren nach wenigstens einem der vorhergehenden Ansprüche, **dadurch gekennzeichnet, dass** der wenigstens eine Sensor (9.1,...9.4) als Füllstandssensor ausgebildet ist und wenigstens einen Füllstand eines Behälters detektiert..

7. Verfahren nach wenigstens einem der vorhergehenden Ansprüche, **dadurch gekennzeichnet, dass** der wenigstens eine Sensor als Ertragssensor (8) ausgebildet ist, und der Ertragssensor (8) die Befüllung des Behälters (3) pro Zeiteinheit in einem Kornelevator (2) erfasst.

8. Verfahren nach einem der vorhergehenden Ansprüche,**dadurch gekennzeichnet, dass** der Sensor (8, 16, 9.1,...9.4) mit der Steuereinheit (20) und einer Verrechnungseinheit (13) gekoppelt ist und ein Eingangssignal für die Verrechnungseinheit (13) generiert.

9. Verfahren nach einem der vorhergehenden Ansprüche, **dadurch gekennzeichnet, dass** eine Verrechnungseinheit (13) eine Maschinenmasse und eine auf jeden Radreifen (7) anteilig wirkende Teilmasse berechnet.

10. Verfahren nach wenigstens einem der vorangegangenen Ansprüche, **dadurch gekennzeichnet, dass** die Masse des Vorsatzgerätes (15) über einen Drucksensor (16) einer Stützhydraulik (18) bestimmt wird.

11. Verfahren nach wenigstens einem der vorhergehenden Ansprüche,**dadurch gekennzeichnet, dass** der minimal zulässige Reifendruck durch Sollwertkurven begrenzt wird, wobei die Sollwertkurven (21.1, 21.2) zumindest einen der Parameter Maschinenmasse, Geschwindigkeit und Reifentyp berücksichtigen.

12. Verfahren nach wenigstens einem der vorangehenden Ansprüche, **dadurch gekennzeichnet, dass** die Sollwertkurve (21.1, 21.2) In einem Speicher (14) gespeichert ist.

13. Verfahren nach wenigstens einem der vorangehenden Ansprüche, **dadurch gekennzeichnet, dass** eine obere Geschwindigkeitsgrenze (22.1...22.2), der Typ eines Vorsatzgerätes (15) und mindestens ein Reifentyp über ein Bedienfeld (19) in den Speicher (14) eingebbar sind.

14. Verfahren nach wenigstens einem der vorangegangenen Ansprüche,**dadurch gekennzeichnet, dass** die Steuereinheit (20) den Reifendruck auf den minimalen zulässigen Reifendruck regelt.

15. Verfahren nach wenigstens einem der vorhergehenden Ansprüche,**dadurch gekennzeichnet, dass** der Reifendruck der Radreifen (7) einzeln und/oder auf einer Seite geregelt wird.

16. Vorrichtung zur automatischen Druckregelung von gasgefüllten Radreifen an einer selbstfahrenden Erntemaschine mit einer Reifendruckregelanlage (6), die mit einer Steuereinheit (20) ausgestattet ist,
**gekennzeichnet durch**,
Sensoren (8,16, 9.1 ... 9.4) zur Messung von Parametern, die die Erwärmung des Radreifens (7) beeinflussen;
eine Verrechnungseinheit (13), die mit den Sensoren (8, 16, 9.1 ... 9.4) und der Steuereinheit (20) der Reifendruckregelanlage (6) verbunden ist;
wobei die Steuereinheit (20), in Abhängigkeit von einem von der Verrechnungseinheit (13) generiertem Signal, den Relfendruck für einen begrenzten Zeitraum unter einen minimal zulässigen Reifendruck auf einen kritischen Relfenruck absenkt und nach Ablauf des begrenzten Zeitraums die Reifendruckregelanlage (8) ansteuert, um den Reifendruck automatisch wiederherzustellen,
wobei bis zur wiederholten Aktivierung des Verfahrens eine definierte Abkühlzeit vergangen sein muss.

## Claims

1. A method of automatic pressure regulation of gas-filled tyres on at least one working vehicle comprising at least one tyre pressure regulating installation (6) equipped with at least one control unit (20),
**characterised in that**
the tyre pressure is reduced for a limited period of time below a minimally permissible tyre pressure to a critical tyre pressure,
parameters which influence the rise in temperature of the tyre (7) are measured by way of sensors,
the tyre pressure is automatically restored after the expiry of the limited period of time, and
a defined cooling time has to be passed until repeated activation of the method.

2. A method according to claim 1 **characterised in that** the limited period of time is determined with the parameters and a characteristic value dependent on the tyre (7).

3. A method according to at least one of the preceding claims **characterised in that** the reduction in tyre pressure is activated by way of an emergency push button switch (23).

4. A method according to one of claims 1 to 3 **characterised in that** the tyre pressure of at least one tyre (7) can be changed in dependence on at least one machine mass.

5. A method according to at least one of the preceding claims **characterised in that** at least the one machine mass is measured of at least one sensor (8, 16, 9.1, ...9.4) and the tyre pressure is adjusted in dependence on the signal generated at least in one sensor (8, 16, 9.1,...9.4).

6. A method according to at least one of the preceding claims **characterised in that** the at least one sensor (9.1, 9.4) is in the form of a filling state sensor and detects at least one filling state of a container.

7. A method according to at least one of the preceding claims **characterised in that** the at least one sensor is in the form of a yield sensor (8) and the yield sensor (8) detects the filling of the container (3) per unit of time in a grain elevator (2).

8. A method according to one of the preceding claims **characterised in that** the sensor (8, 16, 9.1, ...9.4) is coupled to the control unit (2) and a calculation unit (13) and generates an input signal for the calculation unit (13).

9. A method according to one of the preceding claims **characterised in that** a calculation unit (13) calculates a machine mass and a partial mass acting proportionately on each tyre (7).

10. A method according to at least one of the preceding claims **characterised in that** the mass of the front-mounted implement (15) is determined by way of a pressure sensor (16) of a hydraulic support arrangement (18).

11. A method according to at least one of the preceding claims **characterised in that** the minimally permissible tyre pressure is delimited by reference value curves, wherein the reference value curves (21.1, 21.2) take account of at least one of the parameters machine mass, speed and tyre type.

12. A method according to at least one of the preceding claims **characterised in that** the reference value curve (21.1, 21.2) is stored in a memory (14).

13. A method according to at least one of the preceding claims **characterised in that** an upper speed limit (22.1, ...22.2), the type of a front-mounted implement (15) and at least one tyre type can be inputted into the memory (14) by way of an operating panel (19).

14. A method according to at least one of the preceding claims **characterised in that** the control unit (20) regulates the tyre pressure to the minimal permissible tyre pressure.

15. A method according to at least one of the preceding claims **characterised in that** the tyre pressure of the tyres (7) is regulated individually and/or on one side.

16. A device for automatic pressure regulation of gas-filled tyres on a self-propelled harvester comprising a tyre pressure regulating installation (6) equipped with a control unit (20),
**characterised by**
sensors (8, 16, 9.1, ...9.4) for measuring parameters which influence the rise in temperature of the tyre (7),
a calculation unit (13) connected to the sensors (8, 16, 9.1, ...9.4) and the control unit (20) of the tyre pressure regulating installation (8),
wherein the control unit (20) lowers the tyre pressure for a limited period of time below a minimally permissible tyre pressure to a critical tyre pressure in dependence on a signal generated by the calculation unit (13) and after the expiry of the limited period of time actuates the tyre pressure regulating installation (6) to automatically restore the tyre pressure,
wherein a defined cooling time has to be passed until repeated activation of the method.

## Revendications

1. Procédé de régulation automatique de la pression de pneumatiques remplis de gaz sur au moins un véhicule de travail, avec au moins une installation de régulation de pression de pneumatiques (6) qui est équipée d'au moins une unité de commande (20), **caractérisé en ce que** la pression des pneumatiques est abaissée, pendant un laps de temps limité, à une pression de pneumatiques critique inférieure à une pression des pneumatiques minimale admissible, **en ce que** des paramètres influant sur l'échauffement du pneumatique (7) sont mesurés au moyen de capteurs, **en ce qu'**à l'expiration du laps de temps limité la pression des pneumatiques est rétablie automatiquement, et **en ce qu'**un temps de refroidissement défini doit s'être écoulé avant que le procédé puisse de nouveau être activé.

2. Procédé selon la revendication 1, **caractérisé en ce que** le laps de temps limité est déterminé à l'aide des paramètres et d'une valeur caractéristique dépendante du pneumatique (7).

3. Procédé selon au moins une des revendications précédentes, **caractérisé en ce que** l'abaissement de la pression des pneumatiques est activé au moyen d'un bouton d'urgence (23).

4. Procédé selon une des revendications 1 à 3, **caractérisé en ce que** la pression d'au moins un pneumatique (7) peut être modifiée en fonction d'au moins une masse de machine.

5. Procédé selon au moins une des revendications précédentes, **caractérisé en ce que** ladite au moins une masse de machine est mesurée au moyen d'au moins un capteur (8, 16, 9.1...9.4), et **en ce que** la pression des pneumatiques est réglée en fonction du signal généré dans ledit au moins un capteur (8, 16, 9.1...9.4).

6. Procédé selon au moins une des revendications précédentes, **caractérisé en ce que** ledit au moins un capteur (9.1...9.4) est réalisé sous la forme d'un capteur de niveau de remplissage et détecte au moins un niveau de remplissage d'une trémie.

7. Procédé selon au moins une des revendications précédentes, **caractérisé en ce que** ledit au moins un capteur (8) est réalisé sous la forme d'un capteur de rendement (8), lequel capteur de rendement (8) détecte le remplissage de trémie (3) par unité de temps dans un élévateur à grains (2).

8. Procédé selon au moins une des revendications précédentes, **caractérisé en ce que** le capteur (8, 16, 9.1...9.4) est couplé à l'unité de commande (20) et à une unité de calcul (13) et génère un signal d'entrée pour l'unité de calcul (13).

9. Procédé selon au moins une des revendications précédentes, **caractérisé en ce qu'**une unité de calcul (13) calcule une masse de machine et une masse partielle agissant proportionnellement sur chaque pneumatique (7).

10. Procédé selon au moins une des revendications précédentes, **caractérisé en ce que** la masse de l'outil frontal (15) est déterminée par un capteur de pression (16) d'une hydraulique de soutien (18).

11. Procédé selon au moins une des revendications précédentes, **caractérisé en ce que** la pression des pneumatiques minimale admissible est limitée par des courbes de valeurs de consigne, les courbes de valeurs de consigne (21.1, 21.2) tenant compte d'au moins un des paramètres que sont la masse de machine, la vitesse et le type de pneumatique.

12. Procédé selon au moins une des revendications précédentes, **caractérisé en ce que** la courbe de valeurs de consigne (21.1, 21.2) est stockée dans une mémoire (14).

13. Procédé selon au moins une des revendications précédentes, **caractérisé en ce que** la limite supérieure de vitesse (22.1...22.2), le type d'un outil frontal (15) et au moins un type de pneumatique peuvent être entrés dans la mémoire (14) au moyen d'un panneau de commande (19).

14. Procédé selon au moins une des revendications précédentes, **caractérisé en ce que** l'unité de commande (20) régule la pression des pneumatiques à la pression des pneumatiques minimale admissible.

15. Procédé selon au moins une des revendications précédentes, **caractérisé en ce que** la pression des pneumatiques (7) est régulée individuellement et/ou d'un côté.

16. Dispositif de régulation automatique de la pression de pneumatiques remplis de gaz sur au moins une machine de récolte automotrice, avec une installation de régulation de pression des pneumatiques (6) qui est équipée d'une unité de commande (20), **caractérisé par** des capteurs (8, 16, 9.1...9.4) pour mesurer des paramètres qui influent sur l'échauffement du pneumatique (7) ; une unité de calcul (13) qui est reliée aux capteurs (8, 16, 9.1...9.4) et à l'unité de commande (20) de l'installation de régulation de pression des pneumatiques (6) ; l'unité de commande (20) abaissant, en fonction d'un signal généré par l'unité de calcul (13), pendant un laps de temps limité, la pression des pneumatiques à une pression des pneumatiques critique inférieure à la pression des pneumatiques minimale admissible et, à l'expiration du laps de temps limité, commandant l'installation de régulation de pression des pneumatiques (6) pour rétablir automatiquement la pression des pneumatiques, un temps de refroidissement défini devant s'être écoulé avant que le procédé puisse de nouveau être activé.
